Europäisches Patentamt

European Patent Office

Office européen des brevets

(19)

(11) Publication number : **0 494 056 A2**

(12) **EUROPEAN PATENT APPLICATION**

(21) Application number : **91850238.6**

(22) Date of filing : **27.09.91**

(51) Int. Cl.⁵ : **G06F 13/40**

(30) Priority : **31.12.90 US 636173**

(43) Date of publication of application :
**08.07.92 Bulletin 92/28**

(84) Designated Contracting States :
**DE FR GB**

(71) Applicant : **International Business Machines
Corporation
Old Orchard Road
Armonk, N.Y. 10504 (US)**

(72) Inventor : **Huynh, Duy Quoc
2600 Greenwood Terrace, G209
Boca Raton, Florida 33431 (US)**
Inventor : **Leverett, Wade Edward
21471 Saw Mill Court
Boca Raton, Florida 33498 (US)**
Inventor : **Tran, Loc Tien
19107 Farlawn Way
Boca Raton, Florida 33434 (US)**

(74) Representative : **Johansson, Lars E. et al
IBM Svenska AB, Intellectual Property Dept.
S-164 92 Stockholm (SE)**

(54) **Dynamically partitionable and allocable bus structure.**

(57) This invention relates to a dynamically partitionable and allocable bus structure for a computer, which facilitates use of the computer in making multi-media presentations. In operation, the computer transfers data among a plurality of data handling devices (12, 15, 34, 35, 36, 38, 39), communicating one with another over a bus (10) which has a plurality of pathway bundles (10A, 10B, 10C), each of which has a plurality of pathways, which has identified steps. The steps include associating with each of the data handling devices a switching device (11) interposed between a corresponding one data handling device and the bus and capable of cooperating with other switching devices for allocating at least one of the bundles to the transfer of data between the respective data handling devices ; dynamically selecting and capturing with the cooperating switching devices and from among available bundles that number of bundles needed for transferring data between at least two cooperating switching devices ; transferring data through the captured bundles between data handling devices associated with the at least two cooperating switching devices ; and releasing captured bundles following completion of data transfer.

Fig. 1

EP 0 494 056 A2

This invention relates to personal computers, and more particularly to a personal computer having a dynamically partitionable and allocable bus which facilitates use of the computer in making multi-media presentations.

Personal computer systems in general and IBM personal computers in particular have attained widespread use for providing computer power to many segments of today's modern society. Personal computer systems can usually be defined as a desk top, floor standing, or portable microcomputer that consists of a system unit having a principal system processor and associated volatile and non-volatile memory, a display monitor, a keyboard, one or more diskette drives, a fixed disk storage, and an optional printer. One of the distinguishing characteristics of these systems is the use of a motherboard or system planar to connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, 50, 60, 70, 80, 90 and 95.

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's MICRO CHANNEL bus architecture exemplified by IBM's PERSONAL SYSTEM/2 Models 50 through 95. The Family I models typically have used the popular INTEL 8088, 8086, or 80286 microprocessor as the principal system processor. These processors have the ability to address one megabyte of memory. The Family II models typically use the high speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

One growing field of application of personal computer technology is what is referred to as "multi-media". While there is no general and widely applicable understanding of what is meant by the term multi-media as applied to personal computers, a typical understanding is that a multi-media application will involved the blending into a single coordinated presentation of video and audio constituents, possibly including images derived from television technology, moving image video, audio derived from MIDI (Music Industry Digital Interface) files, and the like. Data used in such multi-media presentations or displays typically is relatively expansive, requiring many bits and bytes and a high data bandwidth to drive the presentation. Further, where the presentation is to be particularly active (as in full motion video), the rates at which the digital data must be made available become quite high and demanding. In such an environment, intensive processing (in the sense of handling many complicated arithmetic calculations) is less significant than real time processing (in the sense of having processing occur as displays are presented). Indeed, the data transfer rates required to maintain a fully interactive, fully capable multi-media presentation exceed the capability of Family I bus design and place heavy demands on the more capable Family II design.

An object of this invention is to provide, in a multi-media capable personal computer, a bus structure which is available for varying bandwidths of data transfer depending upon the transfers appropriate to various devices coupled to the bus and functioning as source and destination devices for various transfers. In realizing this object of the present invention, enhanced multi-media capability is provided in that bus resources are allocated to the data transfers necessary to effect a desired presentation.

In a further aspect of the invention there is povided a computer capable of high data bandwidth transfers in which the transfer of data required to support a presentation such as a multimedia display is facilitated by a capability of dynamically segmenting and allocating bus resources to various tasks included in the development of the presentation. In realizing this aspect of the invention, the varying demands of data transfer rates imposed by various video and audio constituents of the presentation can be met by shifting available bus capacity to the transfer momentarily required.

In yet a further aspect of the invention there is provided, in a computer environment of the types described, a bus capable of accommodating concurrent transfers between pairs of data sources and data receivers. In realizing this object, the bus provided can be dynamically partitioned to provide multiple bundles of pathways, with each bundle assigned alone or'in conjunction with others to provide a required data bandwidth for one or more types of transfers.

Thus, in accordance with the invention there is provided a dynamically allocable bus structure for handling communications between a plurality of data handling devices, each of the devices being capable of at least one of receiving and transmitting data, comprising: a bus for operatively coupling the devices one to another, said bus comprising a plurality of pathway bundles each of which comprises a plurality of pathways for data communication; and a plurality of switching devices, each interposed between a corresponding one of the data handling devices and said bus, each of said switching devices being operable for cooperating with at least one other switching device for allocating to the transfer of data between the respective data handling devices at least one of said bundles; said switching devices dynamically selecting from among available bundles the number of bundles needed for transferring data between cooperating switching devices, capturing the requisite number of bundles for transfer of data, and releasing captured bundles following completion of data transfer.

There is also in accordance with the invention provided a method of transferring data among a plurality of data handling devices communicating one with another over a bus which has a plurality of pathway bundles, each of which has a plurality of pathways, the method comprising the steps of: associating with each of the data handling devices a switching device interposed between a corresponding one data handling device and the bus and capable of cooperating with other switching devices for allocating at least one of the bundles to the transfer of data between the respective data handling devices; dynamically selecting and capturing with the cooperating switching devices and from among available bundles that number of bundles needed for transferring data between at least two cooperating switching devices; transferring data through the captured bundles between data handling devices associated with the at least two cooperating switching devices; and releasing captured bundles following completion of data transfer.

Below a detailed description of a preferred embodiment of the invention will be given with reference to the accompanying drawings, in which:

Figure 1 is a schematic representation of a personal computer embodying the present invention;

Figure 2 is a view similar to Figure 1 particularly illustrating the allocation of bus resources to a particular transfer of data among devices coupled to an allocable bus in accordance with this invention; and

Figure 3 is a view similar to Figure 2 illustrating a second way in which bus resources may be allocated in accordance with this invention. Detailed Description of Invention

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

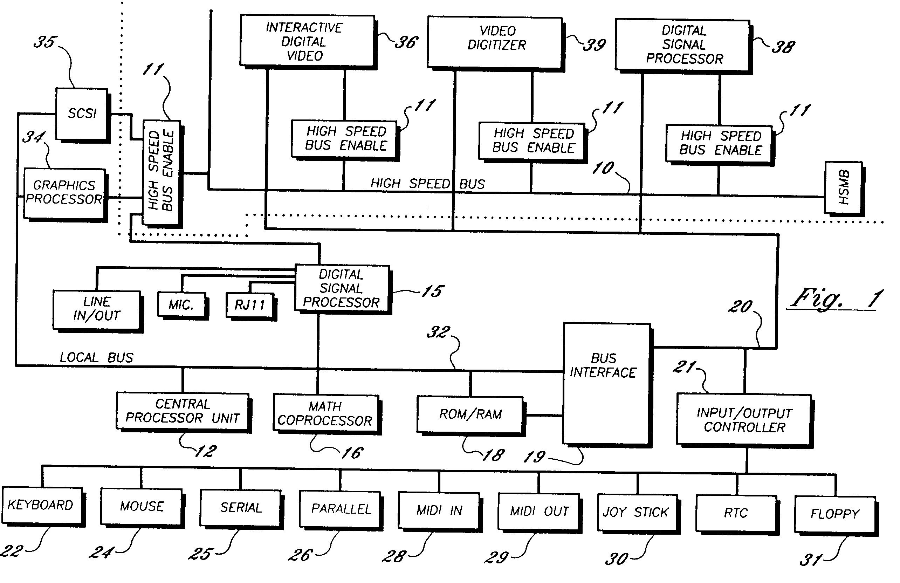

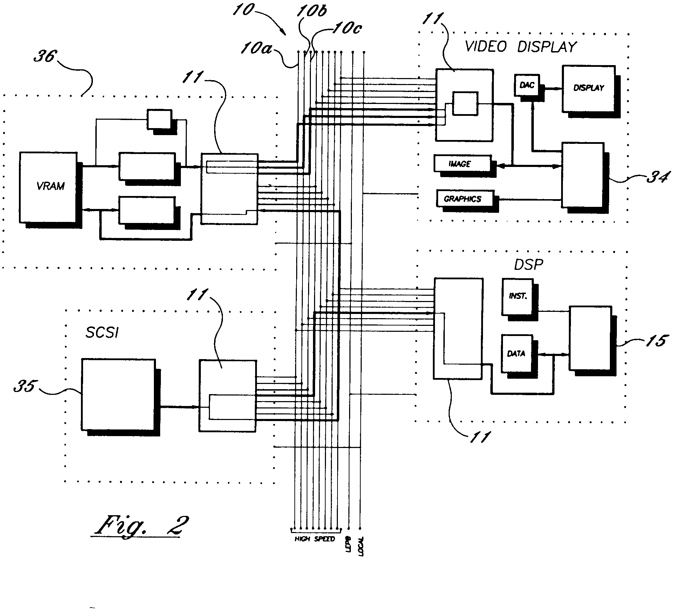

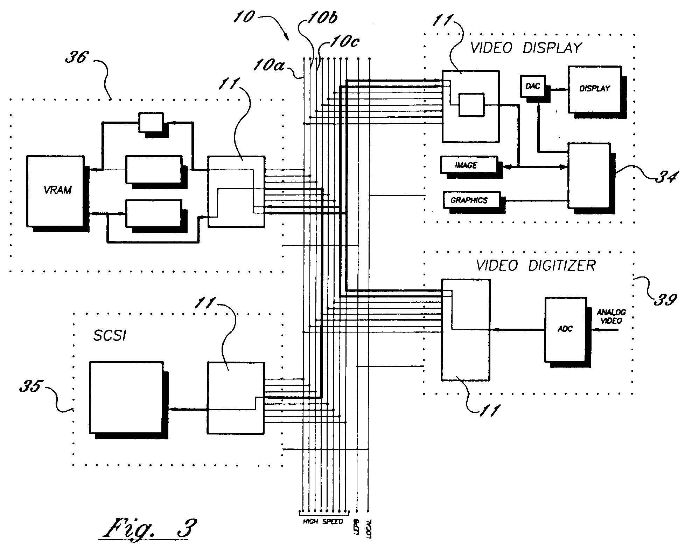

Referring now more particularly to the accompanying drawings and the present invention, Figure 1 is a schematic representation of a personal computer having the dynamically segmented and allocable bus of the present invention, while Figures 2 and 3 are schematic illustrations which expand on Figure 1 by showing certain specific operations as examples only. The knowledgeable reader will recognize that a broad range of other operations, not specifically illustrated, are within the scope of the present invention.

Briefly put, the personal computer of the present invention uses a segmentable, allocable bus 10 to establish independent data pathways between a plurality of data handling devices as described more fully hereinafter. Each of the devices is capable of at least one of receiving and transmitting data, and so may function as at least one of a source and destination device. Many of the devices used (as will become more clear hereinafter) are capable of both receiving and transmitting data and thus may from time to time serve both of the functions of being a source and being a destination device. Devices designed to attach to the bus 10 must be able to couple to the bus at any point and through switching devices 11, each of which is interposed between a corresponding one of the data handling devices and the bus 10. The bus 10 has a plurality of pathway bundles 10A, 10B, 10C (for example and in Figure 2 and 3), each of which comprises a plurality of pathways for data communication. The "bundles" may also be known as "channels". By way of example, the bus 10 may have eight bundles of pathways each of which has eight pathways, making a total of sixty four data conducting pathways which may be selectively segmented and allocated in accordance with this invention. Thus the bus 10 may be described as being sixty four bits wide.

Each of the switching devices 11 is operable for cooperating with at least one other switching device for allocating to the transfer of data between the respective data handling devices at least one of the bundles, and thus segmenting and allocating the bus 10. As brought out more fully hereinafter, the switches 11 function for dynamically selecting from among available bundles the number of bundles needed for transferring data between cooperating switching devices, capturing the requisite number of bundles for transfer of data, and releasing captured bundles following completion of data transfer. Multiple data transfer is possible simultaneously along differing paths and directions, with each data transfer being independent of other occurring at that time in other bus segments. A bus segment allocated for data transfer between two devices may be one or up to eight bundles wide depending upon the data flow requirements of application software and hardware being supported. With a sixty four bit wide capability as here described, the maximum bus bandwidth would be 160 Mbytes/second assuming operation at 20 MHz.

The present invention contemplates that the data handling devices included in a personal computer in accordance with this invention may take a wide variety of types. The types may include at least one of the devices being a central processing unit 12 (Figure 1), at least one of the devices being a video processor 34 (Figures 2 and 3), and at least one of the devices being a digital signal processor 15 (Figure 1) which, in the disclosed embodiment, functions as an audio and communications processor. As will be understood, such data handling devices require varying bandwidths for exchange of data, as video data (either compressed or uncompressed) typically requires broader bandwidths than audio in order to achieve the necessary transfer rates. It will be understood that total transfer rates are related to bandwidth due to the correlation of the numbers of bits which can be moved in parallel to the number of pathways available. The knowledgeable reader will understand that the specific types of devices and data transfers here mentioned are presented in order to provide a clear understanding of the present invention. While they illustrate how the bus architecture of this invention can be used and why is it needed, the arrangement is susceptible to a substantial range of other applications and uses.

At least certain parts of the structure of a personal computer embodying this invention are directly comparable to portions used in other personal computers with which the person of skill in the applicable arts will be familiar. Thus the central processor unit 12 may be associated with a math coprocessor 16, ROM and RAM memory elements 18, a bus interface controller 19, and a conventional bus 20 through which are connected an input/output controller 21 and a range of input/output (I/O) devices. The range of I/O devices may include a keyboard 22, pointer device 24, serial and parallel ports 25 and 26, MIDI in and out ports 28 and 29, a joy stick 30 and a floppy disk drive 31. The central processor unit 12 may also be associated with a CPU local bus 32 to which are connected the audio digital signal processor 15, a graphics processor 34, and a small computer systems interface (SCSI) processor 35 for accessing direct access storage devices (DASD) such as hard disk storage devices, CD ROM and the like.

Returning to the switching devices 11 interposed between the data handling devices described above and the segmentable, allocable bus 10, each of the switching devices comprises a plurality of device coupling pathways operatively connecting the respective switch and a corresponding device, and further comprises a plurality of bus coupling pathways operatively connecting the respective switch and the bus 10. The number of bus coupling pathways is a multiple of the number of device coupling pathways. The device coupling and bus coupling pathways are organized into a plurality of bundles, with the bus coupling bundles corresponding in number to the number of bundles provided in the bus 10. AS a consequence, and as described more fully hereinafter, a pair of cooperating switches 11 may select, for a data transfer therebetween, from among all of the bundles provided in the bus 10. The bus 10 can be either asynchronous or synchronous. The protocol for operation of the bus 10 is contemplated as being in one of two classes -- a native mode and a transparent mode. In native mode, the bus 10 operates asynchronously and data transfers use two line handshaking (as with DATA AVAILABLE* and DATA ACCEPTED*) signals. In transparent mode, the bus 10 may be either asynchronous or synchronous, and individual signals programmed in either direction. That is, a group of signals can be programmed to go from a source device to a destination device, and another group can be programmed to go in the opposite direction.

The switches 11 preferably will be very large scale integrated (VLSI) circuit devices functioning as crossbar or multiplexing devices. As a minimum, the switches 11 must have certain defined characteristics. These characteristics include providing a delay across the device which is the same for all lines or pathways in order to assure uniform signal propagation. For implementation of the transparent mode described above, each signal pathway must be individually'programmable from device to bus connect side and vice versa. Each device side bundle must be connectable with any bus side bundle. When programmed as connected with a source device in native mode, the switch must output DATA AVAILABLE* and receive DATA ACCEPTED* input. The reverse must be the case for a destination device. As will be understood, these two control/status signals are to be bi-directional with programmed direction. If deemed appropriate for native mode use, buffers can be designed for holding data to be transmitted or which has been received.

The operation of the switches 11 is regulated by a software interface here called a bus manager. The bus manager provides for allocation/deallocation of bus resources, responds to queries about availability of bus resources, and handles error and recovery functions. The design of the bus manager software provides an interface for the operating system and application which allows for scaling and expansion of functions as specific applications of the technology here described are further developed.

A minimum set of the functions included within the bus manager software includes query and command functions. The query functions, as contemplated by this invention, include queries about channels or bundles and their availability; about maximum bundle transmission speed; and about bundle status. A query of the first listed type will return numbers indicating the total number of bundles in the system and the number presently unused and available. A query of the second listed type will return a number defining in whole megahertz values the speed to which the corresponding bundle may be driven. This function open the possibility of scaling bus speed and serves as a mechanism for communicating to an intelligent data handling device that data transmission speed may be increased. A query of the third type will return a number indicative of whether the corresponding bundle is normal and clocking or in error, with error indications being identified as being alerted by the transmitting or receiving devices.

Command functions are contemplated as being allocate bundle; deallocate bundle; and reset. The first identifies a particular bundle and assign the bundle to a pair of communicating switches, while the second releases a bundle which has been allocated to a transfer which has been completed. The third function clears errors which have been signaled.

In operation, the computer as described to this point operates so as to function in accordance with a'method of transferring data among a plurality of data handling devices communicating one with another over a bus which has a plurality of pathway bundles, each of which has a plurality of pathways, which has identified steps. The steps include associating with each of the data handling devices a switching device interposed between a corresponding one data handling device and the bus and capable of cooperating with other switching devices for allocating at least one of the bundles to the transfer of data between the respective data handling devices; dynamically selecting and capturing with the cooperating switching devices and from among available bundles that number of bundles needed for transferring data between at least two cooperating switching devices; transferring data through the captured bundles between data handling devices associated with the at least two cooperating switching devices; and releasing captured bundles following completion of data transfer. As will be clear from the discussion above, the step of associating a switching device with each data handling device comprises providing a plurality of bundles of device coupling pathways operatively connecting the switch and a corresponding device and a plurality of bundles of bus coupling pathways operatively connecting the switch and the bus, the number of bus coupling bundles being a multiple of the number of device coupling bundles and being the same as the number of bundles comprised in said bus. Further, the step of dynamically selecting and capturing from among available bundles that number of bundles needed for transferring data between at least two cooperating switching devices comprises selectively interconnecting the bundles of device coupling pathways provided by the switch with a corresponding number of bus coupling bundles provided by the switch.

The possibility of sharing systems resources by dynamically partitioning and allocating the bus 10 interconnecting a plurality of data handling devices opens the opportunity to reduce redundancy of such resources within a multi-media capable system. The schematic views of Figures 2 and 3 illustrate such redundancy reduction as well as illustrating the selection and capture of bundles as described above.

More particularly, Figure 2 illustrates bus segmentation and concurrent data flow for a full motion video presentation accompanied by sound. Audio data from a SCSI device such as a CD-ROM is transferred to an audio digital signal processor 15 for playback. Compressed video data is transferred from the SCSI device to a video subsystem 36 for decompression, and the decompressed video is then transferred to a display controller 34 to generate the video portion of the presentation. In this instance, three bundles are used to transfer decompressed video, and one bundle each are used for audio and compressed video. Further, video memory requirements otherwise necessary for buffering of the signals are significantly reduced due to dynamic sharing of resources.

In Figure 3, bus segmentation and concurrent data flow for the digitizing of still video is illustrated. Analog video from an input source such as a video camera is delivered to and digitized by a video digitizer 39. The resulting digital video is transferred to the display controller 34, and to a video subsystem 36 for compression. Two bundles of the bus 10 are used for the transfer of digital video information in transparent mode, with twelve pathways being used for data and the remaining pathways of the bundles used for a pixel clock signal, horizontal and vertical synchronization signals, and a blanking signal. Compressed video data is stored in a SCSI device using the SCSI controller 35. Two bundles are used for transferring data to the display controller 14, and one is used for transferring compressed video to the SCSI subsystem.

Each of the examples given in connection with Figure 2 and 3 illustrates the flexibility of bandwidth distribution among the devices accessing the partitionable, allocable bus 10.

In the drawings and specifications there has been set forth a preferred embodiment of the invention and, although specific terms are used, the description thus given uses terminology in a generic and descriptive sense only and not for purposes of limitation.

## Claims

1. A dynamically allocable bus structure for handling communications between a plurality of data handling devices (12, 15, 34, 35, 36, 38, 39), each of the devices being capable of at least one of receiving and transmitting data, comprising:
   a bus (10) for operatively coupling the devices one to another, said bus comprising a plurality of pathway bundles (10A, 10B, 10C), each of which comprises a plurality of pathways for data communication; and
a plurality of switching devices (11), each interposed between a corresponding one of the data handling devices (12, 15, 34, 35, 36, 38, 39), and said bus (10), each of said switching devices being operable for cooperating with at least one other switching device for allocating to the transfer of data between the respective data handling devices (12, 15, 34, 35, 36, 38, 39), at least one of said bundles (10A, 10B, 10C);
said switching devices (11) dynamically selecting from among available bundles the number of bundles needed for transferring data between cooperating switching devices, capturing the requisite number of bundles for transfer of data, and releasing captured bundles following completion of data transfer.

2.  A bus as claimed in claim 1, wherein each of said bundles comprises eight pathways.

3.  A bus as claimed in claim 1 or 2, wherein said bus comprises eight bundles.

4.  A bus as claimed in any preceding claim, wherein each of said switching devices comprises a plurality of device coupling pathways operatively connecting said switch and a corresponding device, and further comprises a plurality of bus coupling pathways operatively connecting said switch and said bus, and further wherein the number of said bus coupling pathways is a multiple of the number of said device coupling pathways.

5.  A bus as claimed in any preceding claim, wherein each of said switching devices comprises a plurality of bundles of device coupling pathways operatively connecting said switch and a corresponding device, and further comprises a plurality of bundles of bus coupling pathways operatively connecting said switch and said bus, and further wherein the number of said bus coupling bundles is a multiple of the number of said device coupling bundles.

6.  A bus as claimed in any preceding claim, wherein said switching devices dynamically partition said bus into a plurality of sets of bundles and enable concurrent data transfer among a plurality of sets of paired data handling devices, one of a paired set of data handling devices transmitting data and the other receiving transmitted data.

7.  A computer incorporating a bus structure as claimed in any of the preceding claims.

8.  A computer as claimed in claim 7, comprising a plurality of data handling devices and wherein at least one of said devices is a central processing unit and at least two of said devices are digital signal processors, said data handling devices requiring varying bandwidths for exchange of data.

9.  A computer as claimed in claim 8, wherein at least one of said digital signal processors is a video processor and at least one of said digital signal processors is an audio processor.

10. A method of transferring data among a plurality of data handling devices communicating one with another over a bus which has a plurality of pathway bundles, each of which has a plurality of pathways, the method comprising the steps of:
associating with each of the data handling devices a switching device interposed between a corresponding one data handling device and the bus and capable of cooperating with other switching devices for allocating at least one of the bundles to the transfer of data between the respective data handling devices;
dynamically selecting and capturing with the cooperating switching devices and from among available bundles that number of bundles needed for transferring data between at least two cooperating switching devices;
transferring data through the captured bundles between data handling devices associated with the at least two cooperating switching devices; and
releasing captured bundles following completion of data transfer.

11. A method as claimed in claim 10 wherein said step of associating a switching device with each data handling device comprises providing a plurality of bundles of device coupling pathways operatively connecting the switch and a corresponding device and a plurality of bundles of bus coupling pathways operatively connecting the switch and the bus, the number of bus coupling bundles being a multiple of the . number of device coupling bundles and being the same as the number of bundles comprised in said bus.

12. A method as claimed in claim 11 wherein said step of dynamically selecting and capturing from among available bundles that number of bundles needed for transferring data between at least two cooperating switching devices comprises selectively interconnecting the bundles of device coupling pathways provided by the switch with a corresponding number of bus coupling bundles provided by the switch.

13. A method as claimed in claim 11 or 12, further comprising dynamically partitioning the bus into a plurality of sets of bundles and concurrently transferring data among a plurality of sets of paired data handling devices, one of a paired set of data handling devices transmitting data and the other receiving transmitted data.

14. A method as claimed in any of claims 11-13, further comprising the step of repeating the steps of selecting and capturing bundles, transferring data, and releasing captured bundles as required for sustaining a coordinated presentation, suitable for achieving coordinated multimedia presentations in a computer system comprising a plurality of data handling devices including a central processor unit, a video digital signal processor and an audio digital signal processor communicating one with another over a bus which has a plurality of pathway bundles, each of which has a plurality of pathways.

Fig. 1

SCSI 35

GRAPHICS PROCESSOR 34

HIGH SPEED BUS ENABLE 11

INTERACTIVE DIGITAL VIDEO 36

VIDEO DIGITIZER 39

DIGITAL SIGNAL PROCESSOR 38

HIGH SPEED BUS ENABLE 11

HIGH SPEED BUS ENABLE 11

HIGH SPEED BUS ENABLE 11

HIGH SPEED BUS 10

HSMB

LINE IN/OUT

MIC.

RJ11

DIGITAL SIGNAL PROCESSOR 15

LOCAL BUS

BUS INTERFACE 32

20

21

INPUT/OUTPUT CONTROLLER

CENTRAL PROCESSOR UNIT 12

MATH COPROCESSOR 16

ROM/RAM 18    19

KEYBOARD 22

MOUSE 24

SERIAL 25

PARALLEL 26

MIDI IN 28

MIDI OUT 29

JOY STICK 30

RTC

FLOPPY 31

EP 0 494 056 A2

*Fig. 2*

VIDEO DISPLAY

DISPLAY

DAC

IMAGE

GRAPHICS

34

11

11

VIDEO DIGITIZER

ANALOG VIDEO

ADC

39

11

LOCAL

10b

10c

HIGH SPEED

10

10a

11

VRAM

36

SCSI

11

35

*Fig. 3*